# EUROPEAN PATENT SPECIFICATION

(11) **EP 4 538 546 B1**
(45) Date of publication and mention of the grant of the patent: **10.06.2026**
(21) Application number: 24205465.8
(22) Date of filing: 09.10.2024
(51) Int. Cl.: F16B 2/24, F16B 5/06, F16B 21/09, F16B 21/20, F16B 37/04

(54) **FASTENER ASSEMBLY AND METHOD OF ASSEMBLY OF THE FASTENER**
BEFESTIGUNGSANORDNUNG UND VERFAHREN ZUR MONTAGE DER BEFESTIGUNGSANORDNUNG
ENSEMBLE DE FIXATION ET PROCÉDÉ D'ASSEMBLAGE DE LA FIXATION

(30) Priority: 10.10.2023 EP 23202863
(43) Date of publication of application: 16.04.2025
(73) Proprietor: Aptiv Technologies AG, 8200 Schaffhausen (CH)
(72) Inventor: KWIATKOWSKI, Pawel, 26-600 Radom (PL); JANCZYK, Rafal, 30-703 Kraków (PL); KULINOWSKI, Piotr, 33-150 Wola Rzedzinska (PL)
(74) Representative: INNOV-GROUP

(56) References cited:
- US-B2- 10 890 290
- US-B2- 10 914 337

## Description

### Technical field

The following describes a fastener assembly and method of assembly for use in fastening together parts of motor vehicles.

### Background

In general, prior art fasteners use bolt-type devices with threaded rods, nuts and washers. Alternatively, devices using clips or circlips fastened/attached to rods or studs can be used. However, in general, if a threaded or unthreaded rod is used, the part to be mounted on the rod must be brought parallel to the longitudinal direction of the rod, so that an opening provided on the part to be mounted on the rod (parallel to the longitudinal direction of the rod) is fitted onto that rod. The patent US10890290B2 discloses an auxiliary device for attaching a connection part to a component.

Year after year, changes are introduced into automotive production to make vehicles more robust and reliable, while at the same time seeking to make them lighter, easier to assemble, with more functions, more economical to manufacture and use, and so on. Ever-increasing demands for manufacturing quality and improved production and assembly processes contribute to the search for new solutions. For example, the new solutions developed must meet particular requirements in terms of anti-vibration, assembly process or temperature resistance, particularly in the case of high-voltage electrical circuit components for electric and hybrid vehicles, for which the new harness architecture requires, for example, stable and durable wiring channels in tight spaces. Ease of manufacture is also an important factor, as using parts that are easy to handle helps to reduce errors.

A fastener assembly and an assembly method that at least partially meet the requirements of modern assembly processes are disclosed below.

### Summary

The present disclosure relates to a fastener assembly comprising
- a plastic element fixed to the metallic element at the fastening region, the plastic element comprising a fixing portion in the form of a plate having an top face and a bottom face, the plate extending essentially in a plane and being provided with an edge and an inlet open at the edge (i.e., having a cut-out shape), the inlet being bordered by two longitudinal border segments extending parallel to the plane of the plate in an insertion direction, and a bottom border segment also extending parallel to the plane of the plate between the two longitudinal border segments, the plastic element also comprising locking means,
- a metal insert comprising two legs and a junction between the two legs, the metal insert thus being essentially U-shaped, the insert being inserted into the inlet, each one of the legs comprising hooking means cooperating with the locking means.

This fastener assembly is configured to be fastened on a metallic element having a fastening region, a rod (e.g., the rod of a stud or a stud) being secured to the metallic element and extending substantially perpendicular to the fastening region. The metal insert is then positioned with the rod placed between the two legs.

Thanks to cut-out shape of the inlet, the process of assembling the metallic element with the plastic element is much faster and improves the quality of production and its efficiency. This translates directly into bottom costs and no need for special tools.

The metal insert acts as a spacer. It ensures that a washer or a nut, for example, does not crush or deform the plastic element when it is fitted and tightened on the rod. Tightening only takes place between metal parts (the metal element, the metal insert and the nut and/or washer, for example). In this way, the plastic element is held firmly on the metal element. This hold is reliable over time, even if the temperature becomes relatively high and/or if the plastic element is subjected to vibrations.

In an example of embodiment, the fastener assembly comprises, on both the top face and the bottom face, a raised rim around the inlet and the locking means comprises at least one locking surface formed on the top face, in the raised rim, perpendicular to the insertion direction; then the hooking means cooperates with/engages said at least one locking surface. Therefore, for example, the metal insert remains fastened onto the plastic element, even if the plastic element is not mounted on the rod yet.

According to an embodiment, on at least one of top face and the bottom face, the raised rim comprises, in the vicinity of the edge, at least one notch for accommodating hooking means. In other words, the top and bottom faces are not necessarily symmetrical in relation to the median plane of the plate of the plastic element.

In an example of embodiment, the plastic element comprises on both the top face and the bottom face, a raised rim around the inlet, the locking means comprising at least one locking surface formed on both the top face and the bottom face, in the raised rim, said at least one locking surface being perpendicular to the insertion direction, and the hooking means cooperating with said at least one locking surface on both the top face and the bottom face. In other words, in this example of embodiment, the top and bottom faces are symmetrical in relation to the median plane of the plate of the plastic element. According to an embodiment, the raised rim comprises, in the vicinity of the edge, slanted surfaces configured to ease the insertion, in the insertion direction, of the insert in the inlet.

According to an embodiment, the plastic element comprises openings in the raised rim. Each one of these openings results from the passage of a moulding pocket that contributes to form one or several locking surfaces.

According to an embodiment, the plastic element comprises a positioning feature on the bottom border segment. This positioning feature helps positioning and maintaining the metal insert on the plastic element.

According to an embodiment, the fastener assembly comprises retention means cooperating with the rod and the insert to retain the plastic element on the metallic element. For example, the retention means comprises at least one element from the list comprising a washer, a nut, a clip, a circlip. This list being not limitative.

According to another aspect, it is disclosed below a method for assembling a fastener assembly mentioned above. This method comprises in particular the following operations: mounting the insert on the plastic element, mounting the plastic element on the metallic element in sliding the plastic element on the metallic element essentially parallel to the insertion direction (and essentially parallel to the plane of the fastening region), with the rod inserted in the inlet.

### Drawings

Exemplary embodiments and functions of the present disclosure will be described in more detail in the following with reference to the drawings showing in:
- Fig. 1 is a schematic perspective view of an example of embodiment of a fastener assembly;
- Fig. 2 is a schematic perspective view of the top face of a plastic element configured to be mounted with the fastener assembly shown in Fig. 1;
- Fig. 3 is a schematic perspective view of the bottom face of a plastic element shown in Fig. 2;
- Fig. 4 is a schematic perspective view of another example of plastic element configured to be mounted with the fastener assembly shown in Fig. 1;
- Fig. 5 is a schematic perspective view of another example of plastic element configured to be mounted on a metal element.

### Detailed description

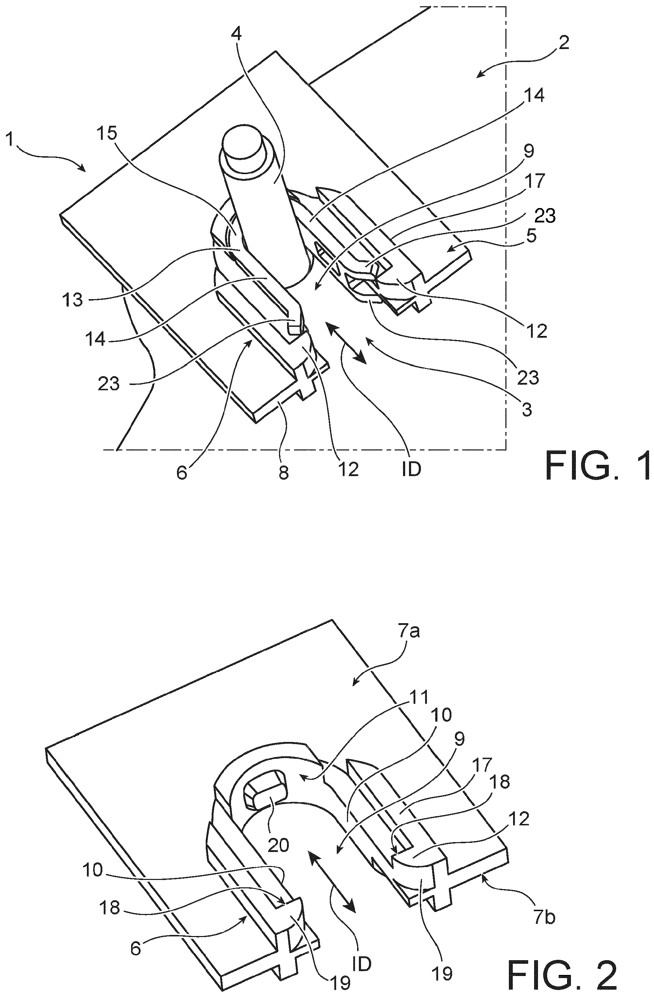

The disclosure illustrated in Figs. 1 and 2 relates to a fastener assembly 1. This fastener assembly 1 comprises at least one a metallic element 2, at least one rod 4, at least one plastic element 5, at least one metal insert 13 and, optionally, at least one retention means (not shown).

The fastener assembly 1 can be used in particular (but not only) when it is possible to fastened a plastic element 5 on a metallic element 2 with a movement parallel to an insertion direction ID which is tangent to a surface of a fastening region 3 of the metallic element 2, the rod 4 being essentially perpendicular to this surface of the fastening region 3. This corresponds to a radial installation direction. The illustrated fastener assembly 1, is easy, quick and cost-effective to install.

The rod 4 is integral with, or secured to, the metallic element 2. For example, the rod 4 is welded to the metallic element 2. Optionally, the rod 4 is threaded so as to receive a nut. Alternatively, the rod 4 receives a washer.

The plastic element 5 is made by moulding. The plastic element 5 is fixed to the metallic element 2 at the fastening region 3. The plastic element 5 comprises a fixing portion 6 in the form of a plate having an top face 7a and a bottom face 7b (the bottom face 7b facing the metallic element). In Figures 1 to 4, only a part (essentially square in shape) of the plastic element 5 is shown. It is to be imagined that the plastic element 5 can have any shape extending beyond the portion shown. The fixing portion 6 extends essentially in a plane and is provided with an edge 8 and an inlet 9 open at the edge 8. The inlet 9 is bordered by two longitudinal border segments 10 (see Fig. 2). For example, the two longitudinal border segments 10 are essentially parallel to each other and essentially parallel to the insertion direction ID. Both longitudinal border segments 10 extend essentially parallel to the plane of the plate-like shape of the fixing portion 6. The inlet 9 is also bordered by a bottom border segment 11. The bottom border segment 11 also extends essentially parallel to the plane of the plate-like shape of the fixing portion 6. The bottom border segment 11 extends between the two longitudinal border segments 10.

The plastic element 5 also comprises locking means 12. For example, the locking means 12 are arranged in a raised rim 17. For example, the locking means 12 have a hook-shape. The raised rim 17 surrounds the inlet 9 along the longitudinal border segments 10 and the bottom border segment 11.

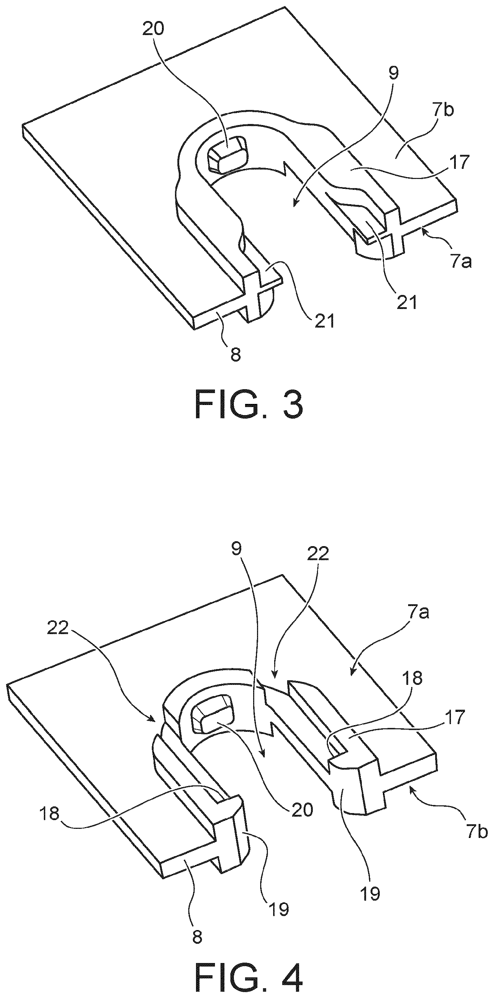

For example, at least two versions of the plate can be designed: a symmetrical version (see Fig. 4), and an asymmetrical version (See Figs. 2 and 3). For example, in the asymmetrical embodiment of the plate each locking means 12 of the top face 7a comprises at least one locking surface 18 (in the illustrated example, two locking surfaces 18). In the symmetrical embodiment of the plate, each locking means 12 of both the top face 7a and the bottom face 7b, comprises at least one locking surface 18 (in the illustrated example, four locking surfaces 18, i.e. two locking surfaces 18 on one and the other of the faces 7a, 7b). In each embodiment, the locking surfaces 18 are perpendicular to the insertion direction ID.

The fastener assembly also comprises a metal insert 13 comprising two essentially parallel legs 14 and a junction 15 between the two legs 14. Thereby, the metal insert 13 is essentially U-shaped. The insert 13 is symmetrical with regard to a plane parallel to the plate (as well as perpendicular to a plane perpendicular to the plate). The insert 13 is inserted into the inlet 9 with the rod 4 placed between the two legs 14. Advantageously, the insert 13 has a thickness (i.e., a dimension perpendicular to a plane parallel to the plate) equal or greater than the thickness of the fixing portion 6 (including the raised rims 17 on the top and bottom sides 7a, 7b). For example, the rod 4 abuts the curved portion (i.e., the junction 15) of the metal insert 13. Each one of the legs 14 comprises, at its free end, two hooking means 23 configured to cooperate with the locking surfaces 18 of the locking means 12. Each hooking means 23 is formed by an extension of a leg 14 bent outwardly relatively to the inlet 9. When the metal insert 13 is mounted on the plastic element, the two hooking means 23 of one of the legs 14 each extend above or below the fixing portion 6 respectively. The raised rim 17 comprises, in the vicinity of the edge 8, slanted surfaces 19 configured to ease the insertion and the mounting, in the insertion direction ID, of the insert 13 in the inlet 9.

In the asymmetric embodiment (Fig. 3), the raised rim 17 of the bottom face 7b comprises, in the vicinity of the edge 8, a notch 21 for accommodating hooking means 23 on the bottom face 7b, whereas on the top face 7a, each hooking means 23 is accommodated behind a locking surface 18. In the symmetric embodiment (Fig. 4), each hooking means 23 is accommodated behind a locking surface 18. Hence, both in the asymmetric embodiment and in the symmetric embodiment the insert 13 straddles the edge of the inlet 9.

Further, the bottom border segment 11 comprises a positioning feature 20. The insert 13 comprises a cavity configured to engage the positioning feature 20. Thereby, the insert 13 is stuck between the positioning feature 20 and the locking surfaces 18. This and/or the fact that the insert 13 straddles the edge of the inlet 9 avoids the insert 13 from being lost before mounting the plastic element 5 on the metallic element 2.

The plastic element 5 is particularly easy to be moulded. There is no need of moulding sliders. Advantageously, the raised rim 17 comprises openings 22 in the raised rim 17 for forming the locking surfaces 18 with moulding pockets extending in the insertion direction ID (see Fig. 4).

One can note that the direction of installation (i.e., essentially parallel to the insertion direction ID) of the plastic element 5 on the rod 4 coincides with the 'moulding direction'. The moulding pocket shape (corresponding to the room left of the metal insert) has a general direction which aligned with the moulding/de-moulding direction of the whole plastic element. This makes it possible to mould the plastic element in the direction of installation, eliminating the need for sliders in the mould.

The method for assembling the fastener assembly (i.e., for installing the plastic element onto the metallic element) comprises at least the following steps:
- mounting the insert 13 on the plastic element 5 (i.e., inserting, in a direction essentially parallel to the plane of the plate of the fixing portion 6, the insert in the inlet 9 from the edge 8 up to a position in which the hooking means 23 are locked behind the locking surfaces 18),
- mounting the plastic element 5 on the metallic element 2 in sliding the plastic element 5 on the metallic element 2, advantageously parallel to the insertion direction ID (i.e., perpendicular to the longitudinal direction of the rod, with the rod 4 engaging the inlet 9 from the edge 8 to the bottom border segment 11),
- securing the plastic element 5 onto the metallic element 2 with fastening means such as a nut, a clip, a circlip, etc., engaging the rod 4; alternatively, the plastic element 5 is fixed onto the metallic element 3, with the metal insert 13 welded onto the rod 4.

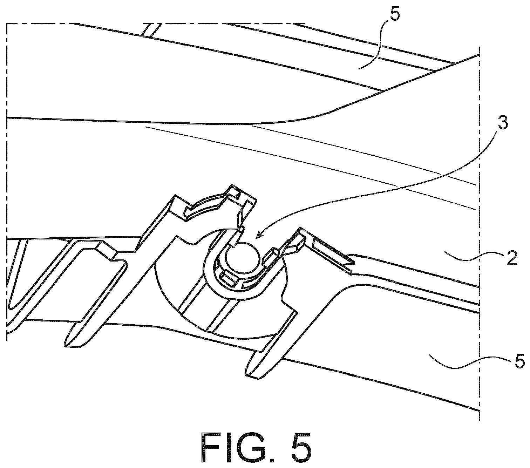

In an example of embodiment illustrated in Fig. 5, the metallic element 2 is a vehicle frame and the plastic element 5 is a cable channel to be fastened on the vehicle frame (one can note that for the sake of clarity, the rod/stud 4 is just represented as a circle on the surface of the metallic element and the metal insert is not shown). Such a cable channel is designed for example for accommodating power cables of EV or HV. For this kind of applications, new harness architectures require stable and durable cable channels in tight areas, as well as meeting stringent requirements in terms of vibrations, mounting, manufacturability and temperature. The disclosed solution minimizes the assembly space required while maintaining the required strength parameters.

However, other applications can be found to this fastener assembly 1. For example, this fastener assembly is applicable to any "plastic element or device to be attached on a surface provided with a stud" (e.g. fuse block, electrical control, channel, intelligent control unit, etc.).

## Claims

1. A fastener assembly (1) comprising
- a plastic element (5) comprising a fixing portion (6) in the form of a plate having an top face (7a) and a bottom face (7b), extending essentially in a plane and provided with an edge (8) and an inlet (9) open at the edge (8), the inlet (9) being bordered by two longitudinal border segments (10) extending parallel to the plane of the plate in an insertion direction (ID), and a bottom border segment (11) also extending parallel to the plane of the plate between the two longitudinal border segments (10), the plastic element (5) also comprising locking means (12),
- a metal insert (13) comprising two legs (14) and a junction (15) between the two legs (14), the metal insert (13) thus being essentially U-shaped, the insert (13) being inserted into the inlet (9), each one of the legs (14) comprising hooking means (23) cooperating with the locking means (12).

2. The fastener assembly (1) of claim 1, comprising, on both the top face (7a) and the bottom face (7b), a raised rim (17) around the inlet (9), the locking means (12) comprising at least one locking surface (18) formed on at least one of the face (7a) and the bottom face (7b), in the raised rim (17), perpendicular to the insertion direction (ID), the hooking means (23) cooperating with said at least one locking surface (18).

3. The fastener assembly (1) of claim 2, wherein, on the bottom face (7b), the raised rim (17) comprises, in the vicinity of the edge (8), at least one notch (21) for accommodating hooking means (23).

4. The fastener assembly (1) of claim 1, comprising on both the top face (7a) and the bottom face (7b), a raised rim (17) around the inlet (9), the locking means (12) comprising at least one locking surface (18) formed on both the top face (7a) and the bottom face (7b), in the raised rim (17), perpendicular to the insertion direction (ID), the hooking means (23) cooperating with the locking surfaces (18) on both the top face (7a) and the bottom face (7b).

5. The fastener assembly (1) according to any one of claims 2 to 4, wherein the raised rim (17) comprises, in the vicinity of the edge (8), slanted surfaces (18) configured to ease the insertion, in the insertion direction (ID), of the insert (13) in the inlet (9).

6. The fastener assembly (1) according to any one of claims 2 to 5, wherein the plastic element (5) comprises openings (22) in the raised rim (17).

7. The fastener assembly (1) according to any one of the preceding claims, comprising a positioning feature (20) for the metal insert (13), on the bottom border segment (11).

8. The fastener assembly (1) according to any one of the preceding claims, comprising
- a metallic element (2) comprising a fastening region (3),
- a rod (4) secured to the metallic element (2) and extending substantially perpendicular to the fastening region (3),
- the plastic element (5) being fixed to the metallic element (2) at the fastening region (3), with the insert (13) inserted into the inlet (9), with the rod (4) placed between the two legs (14).

9. The fastener assembly (1) according claim 8, comprising retention means cooperating with the rod (4) and the insert (13) to retain the plastic element (5) on the metallic element (2).

10. Method for assembling the fastener assembly of claims 8 or 9, comprising mounting the insert (13) on the plastic element (5), mounting the plastic element (5) on the metallic element (2) in sliding the plastic element (5) on the metallic element (2) parallel to the insertion direction (ID).

## Patentansprüche

1. Befestigungsanordnung (1), umfassend
• ein Kunststoffelement (5), das einen Befestigungsabschnitt (6) in Form einer Platte mit einer Oberseite (7a) und einer Unterseite (7b) aufweist, die sich im Wesentlichen in einer Ebene erstreckt und mit einer Kante (8) und einem an der Kante (8) offenen Einlass (9) versehen ist, wobei der Einlass (9) von zwei länglichen Randsegmenten (10), die sich parallel zur Ebene der Platte in einer Einführrichtung (ID) erstrecken, und einem unteren Randsegment (11) begrenzt ist, das sich ebenfalls parallel zur Ebene der Platte zwischen den beiden länglichen Randsegmenten (10) erstreckt, wobei das Kunststoffelement (5) auch Verriegelungsmittel (12) umfasst,
• einen Metalleinsatz (13), der zwei Schenkel (14) und eine Verbindung (15) zwischen den beiden Schenkeln (14) aufweist, wobei der Metalleinsatz (13) somit im Wesentlichen U-förmig ist, wobei der Einsatz (13) in den Einlass (9) eingeführt ist, wobei jeder der Schenkel (14) Hakenmittel (23) aufweist, die mit den Verriegelungsmitteln (12) zusammenwirken.

2. Befestigungsanordnung (1) nach Anspruch 1, umfassend sowohl auf der Oberseite (7a) als auch auf der Unterseite (7b) einen erhabenen Rand (17) um den Einlass (9), wobei die Verriegelungsmittel (12) mindestens eine Verriegelungsfläche (18) umfassen, die auf mindestens einer der Flächen (7a) und der Unterseite (7b) in dem erhabenen Rand (17) senkrecht zur Einführrichtung (ID) ausgebildet ist, wobei die Hakenmittel (23) mit der mindestens einen Verriegelungsfläche (18) zusammenwirken.

3. Befestigungsanordnung (1) nach Anspruch 2, wobei auf der Unterseite (7b) der erhabene Rand (17) in der Nähe der Kante (8) mindestens eine Kerbe (21) zur Aufnahme von Hakenmitteln (23) aufweist.

4. Befestigungsanordnung (1) nach Anspruch 1, die sowohl auf der Oberseite (7a) als auch auf der Unterseite (7b) einen erhabenen Rand (17) um den Einlass (9) aufweist, wobei die Verriegelungsmittel (12) mindestens eine Verriegelungsfläche (18) umfassen, die sowohl auf der Oberseite (7a) als auch auf der Unterseite (7b) in dem erhabenen Rand (17) senkrecht zur Einführrichtung (ID) ausgebildet ist, wobei die Hakenmittel (23) mit den Verriegelungsflächen (18) sowohl auf der Oberseite (7a) als auch auf der Unterseite (7b) zusammenwirken.

5. Befestigungsanordnung (1) nach einem der Ansprüche 2 bis 4, wobei der erhabene Rand (17) in der Nähe der Kante (8) schräge Flächen (18) aufweist, die so konfiguriert sind, dass sie das Einführen des Einsatzes (13) in den Einlass (9) in der Einführrichtung (ID) erleichtern.

6. Befestigungsanordnung (1) nach einem der Ansprüche 2 bis 5, wobei das Kunststoffelement (5) Öffnungen (22) in dem erhabenen Rand (17) aufweist.

7. Befestigungsanordnung (1) nach einem der vorangehenden Ansprüche, umfassend ein Positionierungsmerkmal (20) für den Metalleinsatz (13) am unteren Randsegment (11).

8. Befestigungsanordnung (1) nach einem der vorangehenden Ansprüche, umfassend
• ein metallisches Element (2), das einen Befestigungsbereich (3) aufweist,
• einen Stab (4), der an dem metallischen Element (2) befestigt ist und sich im Wesentlichen senkrecht zu dem Befestigungsbereich (3) erstreckt,
• wobei das Kunststoffelement (5) an dem metallischen Element (2) im Befestigungsbereich (3) befestigt ist, wobei der Einsatz (13) in den Einlass (9) eingeführt ist, wobei der Stab (4) zwischen den beiden Schenkeln (14) platziert ist.

9. Befestigungsanordnung (1) nach Anspruch 8, umfassend Haltemittel, die mit dem Stab (4) und dem Einsatz (13) zusammenwirken, um das Kunststoffelement (5) auf dem metallischen Element (2) zu halten.

10. Verfahren zum Montieren der Befestigungsanordnung nach Anspruch 8 oder 9, umfassend das Montieren des Einsatzes (13) auf dem Kunststoffelement (5), das Montieren des Kunststoffelements (5) auf dem metallischen Element (2) durch Schieben des Kunststoffelements (5) auf dem metallischen Element (2) parallel zur Einführrichtung (ID).

## Revendications

1. Ensemble de fixation (1) comprenant
• un élément en plastique (5) comprenant une partie de fixation (6) sous la forme d'une plaque ayant une face supérieure (7a) et une face inférieure (7b), s'étendant essentiellement dans un plan et pourvue d'un bord (8) et d'une entrée (9) ouverte au niveau du bord (8), l'entrée (9) étant bordée par deux segments de bordure longitudinaux (10) s'étendant parallèlement au plan de la plaque dans une direction d'insertion (ID), et un segment de bordure inférieur (11) s'étendant également parallèlement au plan de la plaque entre les deux segments de bordure longitudinaux (10), l'élément en plastique (5) comprenant également des moyens de verrouillage (12),
• un insert métallique (13) comprenant deux pattes (14) et une jonction (15) entre les deux pattes (14), l'insert métallique (13) étant ainsi essentiellement en forme de U, l'insert (13) étant inséré dans l'entrée (9), chacune des pattes (14) comprenant des moyens d'accrochage (23) coopérant avec les moyens de verrouillage (12).

2. Ensemble de fixation (1) selon la revendication 1, comprenant, à la fois sur la face supérieure (7a) et sur la face inférieure (7b), un rebord surélevé (17) autour de l'entrée (9), les moyens de verrouillage (12) comprenant au moins une surface de verrouillage (18) formée sur au moins l'une de la face (7a) et de la face inférieure (7b), dans le rebord surélevé (17), perpendiculaire à la direction d'insertion (ID), les moyens d'accrochage (23) coopérant avec ladite au moins une surface de verrouillage (18).

3. Ensemble de fixation (1) selon la revendication 2, dans lequel, sur la face inférieure (7b), le rebord surélevé (17) comprend, à proximité du bord (8), au moins une encoche (21) pour recevoir des moyens d'accrochage (23).

4. Ensemble de fixation (1) selon la revendication 1, comprenant à la fois sur la face supérieure (7a) et sur la face inférieure (7b), un rebord surélevé (17) autour de l'entrée (9), les moyens de verrouillage (12) comprenant au moins une surface de verrouillage (18) formée sur la face supérieure (7a) et sur la face inférieure (7b), dans le rebord surélevé (17), perpendiculaire à la direction d'insertion (ID), les moyens d'accrochage (23) coopérant avec les surfaces de verrouillage (18) sur la face supérieure (7a) et sur la face inférieure (7b).

5. Ensemble de fixation (1) selon l'une quelconque des revendications 2 à 4, dans lequel le rebord surélevé (17) comprend, à proximité du bord (8), des surfaces inclinées (18) configurées pour faciliter l'insertion, dans la direction d'insertion (ID), de l'insert (13) dans l'entrée (9).

6. Ensemble de fixation (1) selon l'une quelconque des revendications 2 à 5, dans lequel l'élément en plastique (5) comprend des ouvertures (22) dans le rebord surélevé (17).

7. Ensemble de fixation (1) selon l'une quelconque des revendications précédentes, comprenant un élément de positionnement (20) pour l'insert métallique (13), sur le segment de bordure inférieur (11).

8. Ensemble de fixation (1) selon l'une quelconque des revendications précédentes, comprenant
• un élément métallique (2) comprenant une région de fixation (3),
• une tige (4) fixée à l'élément métallique (2) et s'étendant de manière sensiblement perpendiculaire à la région de fixation (3),
• l'élément en plastique (5) étant fixé à l'élément métallique (2) au niveau de la région de fixation (3), avec l'insert (13) inséré dans l'entrée (9), avec la tige (4) placée entre les deux pattes (14).

9. Ensemble de fixation (1) selon la revendication 8, comprenant des moyens de rétention coopérant avec la tige (4) et l'insert (13) pour retenir l'élément en plastique (5) sur l'élément métallique (2).

10. Procédé d'assemblage de l'ensemble de fixation selon les revendications 8 ou 9, comprenant le montage de l'insert (13) sur l'élément en plastique (5), le montage de l'élément en plastique (5) sur l'élément métallique (2) en faisant coulisser l'élément en plastique (5) sur l'élément métallique (2) parallèlement à la direction d'insertion (ID).
